(19) Europäisches Patentamt
European Patent Office
Office européen des brevets

(11) **EP 4 659 908 A1**

(12) **EUROPÄISCHE PATENTANMELDUNG**

(43) Veröffentlichungstag:
**10.12.2025   Patentblatt 2025/50**

(21) Anmeldenummer: 24180680.1

(22) Anmeldetag: **07.06.2024**

(51) Internationale Patentklassifikation (IPC):
***B25F 5/00*** *(2006.01)*   ***H02M 1/14*** *(2006.01)*

(52) Gemeinsame Patentklassifikation (CPC):
**H02M 1/143; B25F 5/00; H02M 7/5387;**
H02M 7/4826

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Hilti Aktiengesellschaft
9494 Schaan (LI)**

(72) Erfinder: **Scherbaum, Markus
86853 Gennach (DE)**

(74) Vertreter: **Hilti Aktiengesellschaft
Corporate Intellectual Property
Feldkircherstrasse 100
Postfach 333
9494 Schaan (LI)**

(54) **SCHALTUNG ZUR UNTERDRÜCKUNG VON RESONANZEN**

(57)   Werkzeugmaschine enthaltend ein Antrieb, vorzugsweise ein bürstenloser Gleichstrommotor, eine Steuerungseinheit mit einem Wechselrichter zur Drehzahlregelung des Antriebs und eine Energieversorgung, wobei wenigstens ein erster Reihenschwingkreis parallel zu dem Wechselrichter und einem Zwischenkreiskondensator enthalten ist.

Fig. 3

**Beschreibung**

Die vorliegende Erfindung betrifft eine Werkzeugmaschine enthaltend ein Antrieb, vorzugsweise ein bürstenloser Gleichstrommotor, eine Steuerungseinheit mit einem Wechselrichter zur Drehzahlregelung des Antriebs und eine Energieversorgung.

Elektrische betriebene Werkzeugmaschinen besitzen in der Regel drehzahlgeregelte Elektromotoren als Antrieb. Die Elektromotoren werden typischerweise von einer Ansteuereinrichtung (auch als Leistungselektronik bezeichnet) mit einem Inverter (= Wechselrichter) angesteuert. Der Wechselrichter wird hierbei mit einer PWM-Frequenz geschaltet (PWM = Pulsweitenmodulation). Durch die Pulsweitenmodulation entsteht hierbei auch eine pulsförmige Inverterstromaufnahme. Der Inverterstrom enthält dadurch Frequenzanteile mit PWM-Frequenz und deren vielfache Oberschwingungen. Diese Frequenzanteile können Schwingungen mit der Energiequelle (z.B. Akkupack bei akkubetriebenen Werkzeugmaschinen oder das Stromnetz bei netzbetriebenen Werkzeugmaschinen) hervorrufen. Die Impedanz der Energiequelle zusammen mit der Zwischenkreiskapazität (auch als Pufferkapazität oder Bulk-Kapazität bezeichnet) der Ansteuereinrichtung bilden hierbei einen ungewollten Schwingkreis, welcher ungewollt hohe Kreisströme hervorrufen kann. Diese Ströme belasten die Energiequelle unnötigerweise und verursachen eine zusätzliche Erwärmung in der Energiequelle und der Zuleitung zur Ansteuereinrichtung.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Werkzeugmaschine enthaltend ein Antrieb, vorzugsweise ein bürstenloser Gleichstrommotor, eine Steuerungseinheit mit einem Wechselrichter zur Drehzahlregelung des Antriebs und eine Energieversorgung.

Erfindungsgemäß ist wenigstens ein erster Reihenschwingkreis parallel zu dem Wechselrichter und einem Zwischenkreiskondensator enthalten.

Der erste Reihenschwingkreis weist dabei eine erste Spule mit einem ersten Induktionswert und einen ersten Kondensator mit einem ersten Kapazitätswert auf.

Der Reihenschwingkreis kann dabei auch als LC-Reihenschaltung oder Schwingkreis bezeichnet werden.

Gemäß einer alternativen Ausführungsform kann es möglich sein, dass wenigstens ein zweiter Reihenschwingkreis enthalten ist, welcher parallel sowohl zu dem Wechselrichter und einem Zwischenkreiskondensator als auch zu dem ersten Reihenschwingkreis angeordnet ist.

Es ist zu beachten, dass hierbei der erste Reihenschwingkreis eine erste Spule mit einem ersten Induktionswert sowie einen ersten Kondensator mit einem ersten Kapazitätswert aufweist und der zweite Reihenschwingkreis eine zweite Spule mit einem zweiten Induktionswert sowie einen zweiten Kondensator mit einem zweiten Kapazitätswert aufweist.

Der erste Induktionswert kann dabei höher oder niedriger sein als der zweite Induktionswert. Es ist jedoch auch möglich, dass der erste Induktionswert der ersten Spule des ersten Reihenschwingkreises und der zweite Induktionswert der zweiten Spule des zweiten Reihenschwingkreises identisch ist.

Der erste Kapazitätswert ist höher oder niedriger als der zweite Kapazitätswert. Es ist jedoch auch möglich, dass der erste Kapazitätswert des ersten Kondensators des ersten Reihenschwingkreises und der zweite Kapazitätswert des ersten Kondensators des zweiten Reihenschwingkreises identisch ist.

Entsprechend einer alternativen Ausführungsform kann es möglich sein, dass der wenigstens erste und/oder zweite Reihenschwingkreis wenigstens ein Widerstandselement enthält.

Das Widerstandselement kann dabei als diskreter Widerstand ausgestaltet sein.

In dem Fall, dass sowohl der wenigstens erste als auch zweite Reihenschwingkreis jeweils ein Widerstandelement enthalten, kann es vorteilhaft sein, dass das wenigstens eine Widerstandselement des ersten Reihenschwingkreises einen höheren oder niedrigeren Widerstandswert aufweist als das wenigstens eine Widerstandselement des zweiten Reihenschwingkreises. Es ist jedoch auch möglich, dass das wenigstens eine Widerstandselement des ersten Reihenschwingkreises und das wenigstens eine Widerstandselement des zweiten Reihenschwingkreises einen identischen Widerstandswert aufweisen.

Gemäß einer weiteren alternativen Ausführungsform kann es möglich sein, dass der wenigstens erste oder zweite Reihenschwingkreis wenigstens eine Spule mit einem Induktivitätswert sowie einen Kondensator mit einem Kapazitätswert enthält, und wobei die Schaltfrequenz einer Ansteuereinrichtung für den Antrieb im Wesentlichen gleich ist zu einer auf einem Induktivitätswert und Kapazitätswert basierenden Resonanzfrequenz.

Jeder Reihenschwingkreis löscht einen Frequenzanteil aus, welcher eine Schwingung mit der Energiequelle dann nicht mehr anregen kann.

Die Anzahl der parallelen Schwingkreise gibt an, wie viele Frequenzanteile man unterdrücken will (z.B. eine Grundschwingung, eine erste Oberschwingung, eine zweite Oberschwingung, etc.).

Es kann aber auch sinnvoll sein, nur eine Grundschwingung oder nur eine einzige Oberschwingung zu unterdrücken.

Die Bandbreite bzw. Güte des Reihenschwingkreises kann über das Verhältnis von Induktivität und Kapazität des Reihenschwingkreises eingestellt werden.

In der Regel ist eine höhere Bandbreite für den Wert der Induktivität und Kapazität vorteilhaft, um robuster gegen Abweichung der PWM-Frequenz des Wechselrichters zu sein.

Wenn die Resonanzfrequenz der Reihenschwingkreises auf die PWM-Frequenz des Ansteuereinrichtung abgestimmt ist, minimiert sich die Impedanz für die Grundschwingungsanteil des Inverterstroms bzw. stellt bei vernachlässigbar kleinem Widerstandswert einen Kurzschluss für diesen Stromanteil dar.

So wirkt dieser Frequenzanteil nicht mehr auf die Energiequelle, da der Reihenschwingkreis diesen Frequenzanteil kurzschließt, eine Anregung eines schwingfähigen Konstruktes aus Impedanz der Energiequelle und der Zwischenkreiskapazität wird hierbei vermieden.

Da aber der Inverterstrom neben der Grundschwingung auch noch Oberschwingungsströme enthält ist eine vollständige Unterdrückung von Schwingungen mit nur einem Reihenschwingkreis nicht möglich, da diese nur auf eine bestimmte Resonanzfrequenz eingestellt werden kann. Die Oberschwingungen können durch weitere parallel angeordnete Reihenschwingkreise unterdrückt werden.

Entsprechend einer weiteren alternativen Ausführungsform kann es möglich sein, dass die Energieversorgung in Form wenigstens eines Akkumulators oder einer Netzstromquelle ausgestaltet ist. Der Akkumulator ist dabei als Energieversorgung mit einem Gleichstrom bzw. einer Gleichspannung und die Netzstromquelle ist wiederum als Energieversorgung mit einem Wechselstrom bzw. einer Wechselspannung ausgestaltet.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:

Figur 1     eine Seitenansicht auf eine Werkzeugmaschine mit einer als Akkumulator ausgestalteten Energieversorgung;

Figur 2     einen Schaltplan des erfindungsgemäßen Gegenstands gemäß einer ersten Ausführungsform;

Figur 3     einen Schaltplan des erfindungsgemäßen Gegenstands gemäß einer zweiten Ausführungsform;

Figur 4     einen Schaltplan des erfindungsgemäßen Gegenstands gemäß einer dritten Ausführungsform;

Figur 5     einen Schaltplan des erfindungsgemäßen Gegenstands gemäß einer vierten Ausführungsform; und

Figur 6     einen Schaltplan des erfindungsgemäßen Gegenstands gemäß einer fünften Ausführungsform.

**Ausführungsbeispiele:**

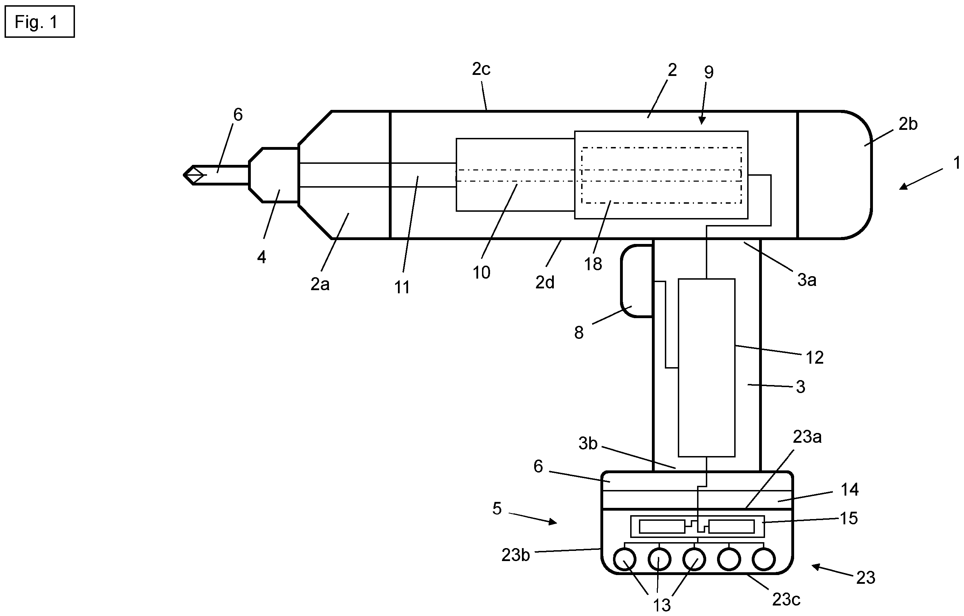

In Figur 1 ist eine Werkzeugmaschine 1 gezeigt.

Die in Figur 1 dargestellte Werkzeugmaschine 1 ist gemäß einer beispielhaften Ausführungsform in Form eines Akku-Schraubers ausgestaltet.

Gemäß einem alternativen Ausführungsbeispiel kann die Werkzeugmaschine 1 auch in Form einer Säge, eines Schleifgeräts, eines Bohrhammers oder dergleichen ausgestaltet sein.

Die als Akku-Schrauber ausgestaltete Werkzeugmaschine 1 enthält dabei im Wesentlichen ein Gehäuse 2, einen Handgriff 3 und eine Werkzeugaufnahme 4.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs 7. In dem beispielhaften Ausführungsbeispiel ist das Werkzeug als Schrauberbit ausgestaltet.

An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 ebenfalls gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Schnittstelle 6 kann eine Energieversorgung 5 wiederlösbar befestigt werden.

Die Schnittstelle 6 der Werkzeugmaschine 1 enthält dabei einen Pluskontakt, einen Minuskontakt sowie einen Kommunikationskontakt. Weder der Pluskontakt, der Minuskontakt noch der Kommunikationskontakt der Schnittstelle 6 der Werkzeugmaschine 1 sind in den Figuren dargestellt.

In dem vorliegenden Ausführungsbeispiel ist die Energieversorgung 5 in Form eines einzelnen Akkumulators ausgestaltete. Alternativ kann auch mehr als ein Akkumulator als Energieversorgung der Werkzeugmaschine 1 vorgesehen sein.

Die Energieversorgung 5 dient zum Versorgen der Werkzeugmaschine mit elektrischer Energie.

Im Inneren des Gehäuses 2 ist im Wesentlichen einen Antrieb 9 in Form eines Elektromotors, eine Getriebevorrichtung 10, eine Antriebswelle 11 und eine Steuereinrichtung 12 positioniert.

Der als Elektromotor ausgestaltete Antrieb 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug 7 übertragen werden kann.

Der als Elektromotor ausgestaltete Antrieb 9 ist in Form eines bürstenlosen Gleichstrommotors ausgestaltet.

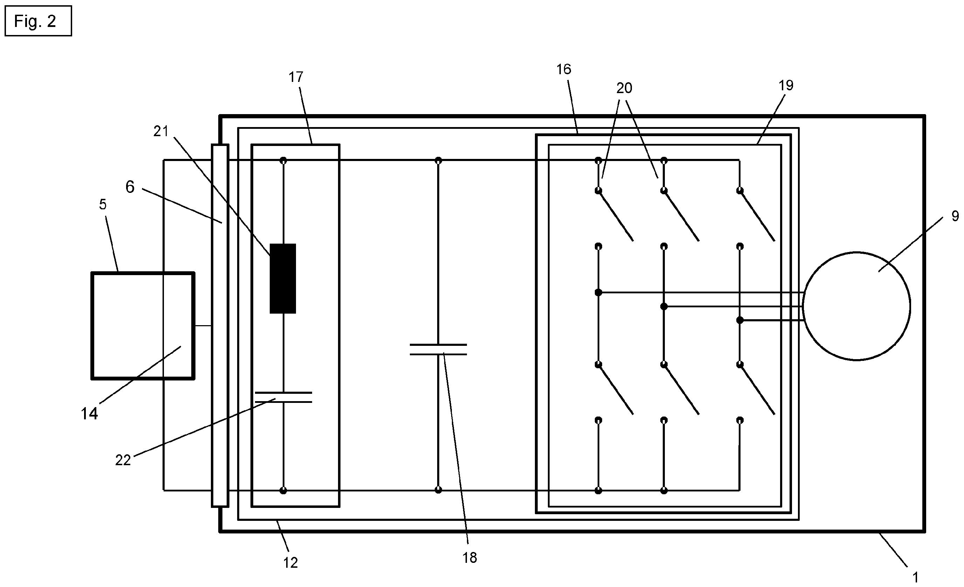

Die Steuereinrichtung 12 enthält gemäß einem ersten Ausführungsbeispiel einen Wechselrichter 16, einen ersten Reihenschwingkreis 17 und einen Zwischenkreiskondensator 18, vgl. Figur 2. Der erste Reihenschwingkreis 17, der Zwischenkreiskondensator 18 und der Wechselrichter 16 sind parallel zueinander angeordnet.

Der Wechselrichter 16 kann auch als Inverter bezeichnet werden und enthält wiederum eine Ansteuereinrichtung 19 mit Schaltelementen 20. Vorliegend ist die Ansteuereinrichtung 19 als H-Brücke mit einer Anzahl an Schaltelementen 20 ausgestaltet.

Die Schaltelemente 20 sind dabei als Transistoren ausgestaltet. Die Transistoren sind als MOSFETs ausgestaltet.

Der Wechselrichter 16 dient zum Erzeugen einer Schaltfrequenz für die Schaltelemente 20 der Ansteuereinrichtung 19. Vorliegend erfolgt die Schaltung der Schaltelemente 20 mittels der Pulsweitenmodulation (PWM) ausgestaltet. Die Schaltfrequenz bezieht dann dabei auf eine PWM-Frequenz.

Der erste Reihenschwingkreis 17 enthält gemäß dem ersten Ausführungsbeispiel eine erste Spule 21 und einen ersten Kondensator 22. Die erste Spule 21 weist dabei eine ersten Induktionswert $L_1$ und der erste Kondensator 22 weist einen ersten Kapazitätswert $C_1$ auf.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 23, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 23 angeordnet.

Das Akku-Gehäuse 23 enthält dabei im Wesentlichen ein Deckelelement 23a, vier Seitenwände 23b und ein Bodenelement 23c.

Die Akku-Schnittstelle 14 ist an der Außenseite des Deckelelements 23a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf.

Die Akku-Schnittstelle 14 ist mit der Schnittstelle 6 der Werkzeugmaschine 1 so verbindbar, dass jeweils die Plus- und Minuskontakte des Akkumulators 5 und der Werkzeugmaschine 1 miteinander verbindbar sind. Darüber hinaus sind die Kommunikationskontakte des Akkumulators 5 und der Werkzeugmaschine 1 miteinander verbindbar.

Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie.

Die Energiespeicherzellen 13 sind in zylindrischer Form sowie auf Basis einer Lithium-Ionen-Technologie ausgestaltet.

Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13.

Darüber hinaus wird mit Hilfe der Steuerungseinrichtung 15 die Menge an elektrischer Energie gesteuert, die von den Energiespeicherzellen 13 aufgenommen oder abgegeben werden sollen.

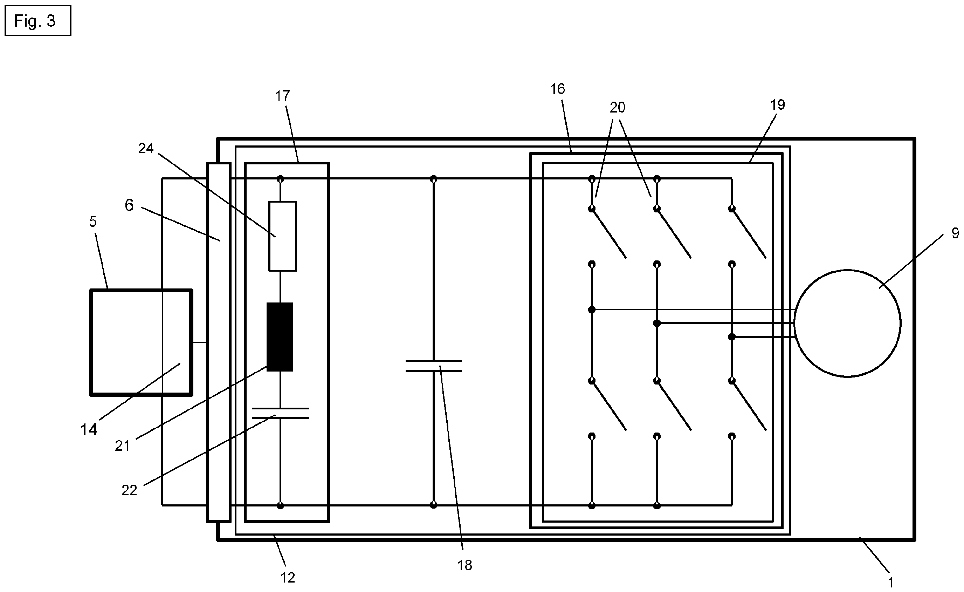

Figur 3 zeigt die Steuereinrichtung 12 gemäß einem zweiten Ausführungsbeispiel.

Die Steuereinrichtung 12 gemäß dem zweiten Ausführungsbeispiel ist dabei im Wesentlichen identisch mit der Steuereinrichtung 12 gemäß dem ersten Ausführungsbeispiel. Im Unterschied zu dem ersten Ausführungsbeispiel enthält die Steuereinrichtung 12 gemäß dem zweiten Ausführungsbeispiel einen ersten Reihenschwingkreis 17 mit einer ersten Spule 21, einem ersten Kondensator 22 und einem ersten Widerstandelement 24. Das erste Widerstandselement 24 weist einen ersten Widerstandswert $R_1$ auf.

Die erste Spule 21, der erste Kondensator 22 und das erste Widerstandselement 24 sind in Reihe zueinander geschaltet.

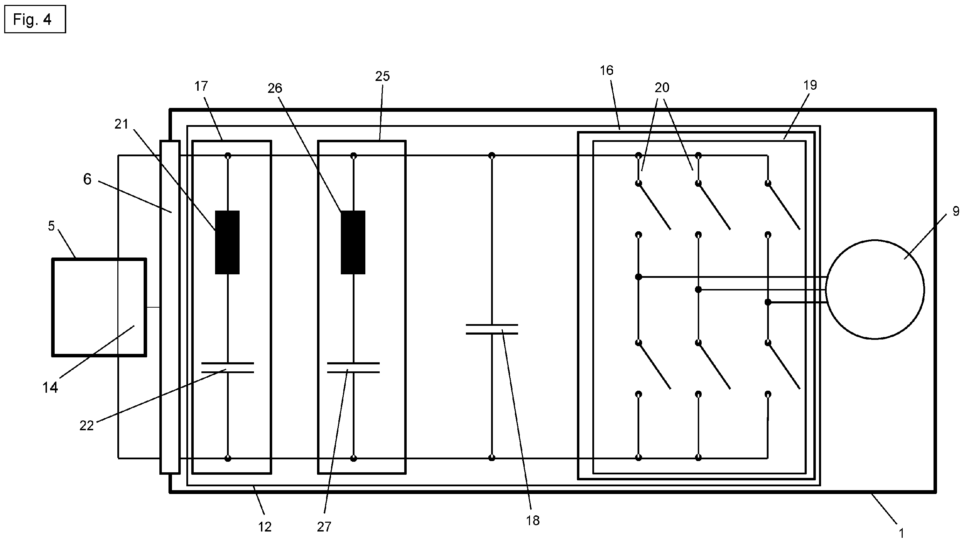

Figur 4 zeigt die Steuereinrichtung 12 gemäß einem dritten Ausführungsbeispiel. Die Steuereinrichtung 12 gemäß dem dritten Ausführungsbeispiel unterscheidet sich von der Steuereinrichtung 12 gemäß dem ersten Ausführungsbeispiel dadurch, dass parallel zu dem ersten Reihenschwingkreis 17 ein zweiter Reihenschwingkreis 25 geschaltet ist. Der erste Reihenschwingkreis 17 enthält eine erste Spule 21 mit einem ersten Induktionswert $L_1$ und einen ersten Kondensator 22 mit einem ersten Kapazitätswert $C_1$. Der zweite Reihenschwingkreis 25 enthält eine zweite Spule 26 mit einem zweiten Induktionswert $L_2$ und einen zweiten Kondensator 27 mit einem zweiten Kapazitätswert $C_2$. Der erste Reihenschwingkreis 17 und zweite Reihenschwingkreis 25 sind parallel zueinander geschaltet.

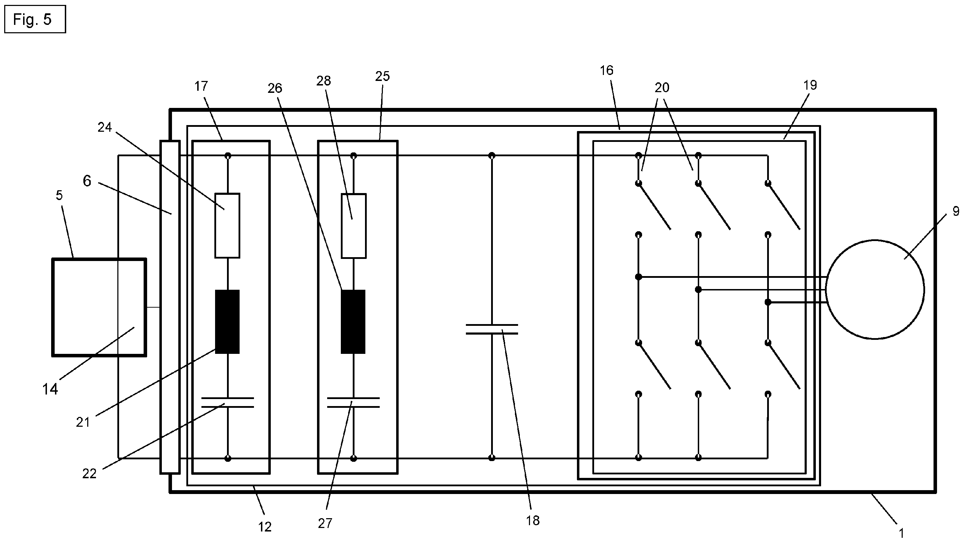

Figur 5 zeigt die Steuereinrichtung 12 gemäß einem vierten Ausführungsbeispiel. Die Steuereinrichtung 12 enthält dabei einen ersten Reihenschwingkreis 17 und zweiten Reihenschwingkreis 25, wobei der erste Reihenschwingkreis 17 eine erste Spule 21 mit einem ersten Induktionswert $L_1$, einen ersten Kondensator 22 mit einem ersten Kapazitätswert C, und ein erstes Widerstandelement 24 mit einem ersten Widerstandswert $R_1$ enthält. Der zweite Reihenschwingkreis 25 enthält eine zweite Spule 26 mit einem zweiten Induktionswert $L_2$, einen zweiten Kondensator 27 mit einem zweiten Kapazitätswert $C_2$ und ein zweites Widerstandselement 28 mit einem zweiten Widerstandswert $R_1$. Der erste Reihenschwingkreis 17 und zweite Reihenschwingkreis 25 sind parallel zueinander geschaltet.

Darüber hinaus sind der erste und zweite Reihenschwingkreis 17, 25 parallel dem Zwischenkreiskondensator 18 und den Wechselrichter 16 geschaltet.

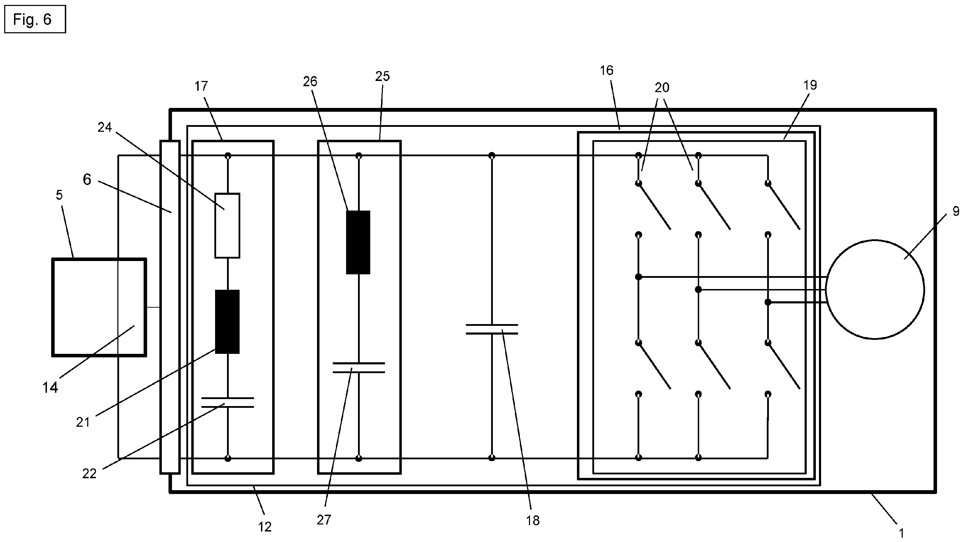

Figur 6 zeigt die Steuereinrichtung 12 gemäß einem fünften Ausführungsbeispiel. Die Steuereinrichtung 12 enthält dabei einen ersten und zweiten Reihenschwingkreis 17, 25, wobei der erste Reihenschwingkreis 17 eine erste Spule 21 mit einem ersten Induktionswert L1, einen ersten Kondensator 22 mit einem ersten Kapazitätswert C, und ein erstes Widerstandelement 24 mit einem ersten Widerstandswert $R_1$ enthält. Der zweite Reihenschwingkreis 25 enthält lediglich eine zweite Spule 26 mit einem zweiten Induktionswert $L_2$ und einen zweiten Kondensator 27 mit einem zweiten Kapazitätswert $C_2$. Der erste und zweite Reihenschwingkreis 17, 25 sind parallel zueinander geschaltet. Des Weiteren sind der erste und zweite Reihenschwingkreis 17, 25 parallel dem Zwischenkreiskondensator 18 und den Wechselrichter 16 geschaltet.

Es ist zu beachten, dass sowohl der Induktivitätswert L für die verwendeten Spulen als auch der Kapazitätswert C für die verwendeten Kondensatoren so gewählt werden, dass die Schaltfrequenz einer Ansteuereinrichtung 19 für den Antrieb 9 im Wesentlichen einer mittels der Formel A ermittelten Resonanzfrequenz f entspricht.

$$f = \frac{1}{2\pi\sqrt{LC}}$$

Formel A

Die Resonanzfrequenz f des Reihenschwingkreises muss idealerweise genau die Schaltfrequenz oder Oberschwingungen treffen, damit es diese Frequenzanteile kurzschließt. Die Resonanzfrequenz f des Widerstandelements und Spule kann auch in unmittelbarer Nähe der Schalfrequenz oder deren Oberschwingungen liegen, aber je größer der Unterschied, desto schlechter die Wirkung des Reihenschwingkreises.

**Bezugszeichen**

| 1 | Werkzeugmaschine |
|---|---|
| 2 | Gehäuse der Werkzeugmaschine |
| 2a | vorderes Ende des Gehäuses |
| 2b | hinteres Ende des Gehäuses |
| 2c | oberes Ende des Gehäuses |
| 2d | unteres Ende des Gehäuses |
| 3 | Handgriff |
| 3a | erstes Ende des Handgriffs |
| 3b | zweites Ende des Handgriffs |
| 4 | Werkzeugaufnahme |
| 5 | Energieversorgung |
| 6 | Schnittstelle der Werkzeugmaschine |
| 7 | Werkzeug |
| 8 | Aktivierungsschalter |
| 9 | Antrieb |
| 10 | Getriebevorrichtung |
| 11 | Antriebswelle |
| 12 | Steuereinrichtung |
| 13 | Energiespeicherzelle |
| 14 | Akku-Schnittstelle |
| 15 | Steuerungseinrichtung des Akkumulators |
| 16 | Wechselrichter |
| 17 | erster Reihenschwingkreis |
| 18 | Zwischenkreiskondensator |
| 19 | Ansteuereinrichtung |
| 20 | Schaltelementen |

| 21 | erste Spule |
| 22 | erster Kondensator |
| 23 | Akku-Gehäuse |
| 23a | Deckelelement des Akku-Gehäuses |
| 23b | Seitenwände des Akku-Gehäuses |
| 23c | Bodenelement des Akku-Gehäuses |
| 24 | erstes Widerstandselement |
| 25 | zweiter Reihenschwingkreis |
| 26 | zweite Spule |
| 27 | zweiter Kondensator |
| 28 | zweites Widerstandselement |
| $L_1$ | erster Induktionswert |
| $C_1$ | erster Kapazitätswert |
| $L_2$ | zweiter Induktionswert |
| $C_2$ | zweiter Kapazitätswert |
| f | Resonanzfrequenz |

**Patentansprüche**

1. Werkzeugmaschine (1) enthaltend ein Antrieb (9), vorzugsweise ein bürstenloser Gleichstrommotor, eine Steuerungseinheit (12) mit einem Wechselrichter (16) zur Drehzahlregelung des Antriebs (9) und eine Energieversorgung (5), **dadurch gekennzeichnet, dass** wenigstens ein erster Reihenschwingkreis (17) parallel zu dem Wechselrichter (16) und einem Zwischenkreiskondensator (18) enthalten ist.

2. Werkzeugmaschine (1) nach Anspruch 1, **dadurch gekennzeichnet, dass** wenigstens ein zweiter Reihenschwingkreis (25) enthalten ist, welcher parallel sowohl zu dem Wechselrichter (16) und einem Zwischenkreiskondensator (18) als auch zu dem ersten Reihenschwingkreis (17) angeordnet ist.

3. Werkzeugmaschine (1) nach Anspruch 1 oder 2, **dadurch gekennzeichnet, dass** der wenigstens erste Reihenschwingkreis (17) einen ersten Induktivitätswert ($L_1$) sowie einen ersten Kapazitätswert ($C_1$) aufweist und der wenigstens zweite Reihenschwingkreis (25) einen zweiten Induktivitätswert ($L_2$) sowie einen zweiten Kapazitätswert ($C_2$) aufweist.

4. Werkzeugmaschine (1) nach wenigstens einem der Ansprüche 1 bis 3, **dadurch gekennzeichnet, dass** der wenigstens erste und/oder zweite Reihenschwingkreis (17, 25) wenigstens ein Widerstandselement (24, 28) enthält.

5. Werkzeugmaschine (1) nach wenigstens einem der Ansprüche 1 bis 4, **dadurch gekennzeichnet, dass** der wenigstens erste oder zweite Reihenschwingkreis (17, 25) wenigstens eine Spule (21, 26) mit einem Induktivitätswert sowie einen Kondensator (22, 27) mit einem Kapazitätswert enthält, und wobei die Schaltfrequenz einer Ansteuereinrichtung (19) für den Antrieb (9) im Wesentlichen gleich ist zu einer auf einem Induktivitätswert und Kapazitätswert basierenden Resonanzfrequenz (f).

6. Werkzeugmaschine (1) nach wenigstens einem der Ansprüche 1 bis 5, **dadurch gekennzeichnet, dass** die Energieversorgung (5) in Form wenigstens eines Akkumulators oder einer Netzstromquelle ausgestaltet ist.

Fig. 1

Fig. 2

Fig. 3

Fig. 4

Fig. 5

Fig. 6

Europäisches
Patentamt

European
Patent Office

Office européen
des brevets

# EUROPÄISCHER RECHERCHENBERICHT

**Nummer der Anmeldung**

**EP 24 18 0680**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2020 214108 A1 (FESTOOL GMBH [DE]) 12. Mai 2022 (2022-05-12) * Absatz [0024]; Abbildung 3 * ----- | 1-6 | INV. B25F5/00 H02M1/14 |
| Y | US 2010/226152 A1 (MECHI ABDALLAH [JP]) 9. September 2010 (2010-09-09) * Absatz [0038]; Abbildung 7 * * Absatz [0008] - Absatz [0011] * * Absatz [0039] - Absatz [0040] * ----- | 1-3,5,6 | |
| Y | DE 10 2011 078304 A1 (SIEMENS AG [DE]) 3. Januar 2013 (2013-01-03) * Abbildung 4 * ----- | 4 | |

**RECHERCHIERTE SACHGEBIETE (IPC)**

B25F
H02M
B25H

Der vorliegende Recherchenbericht wurde für alle Patentansprüche erstellt

| Recherchenort | Abschlußdatum der Recherche | Prüfer |
|---|---|---|
| München | 15. November 2024 | Schürle, Patrick |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2024

| Im Recherchenbericht angeführtes Patentdokument | Datum der Veröffentlichung | Mitglied(er) der Patentfamilie | | Datum der Veröffentlichung |
|---|---|---|---|---|
| DE 102020214108 A1 | 12-05-2022 | CN | 116711206 A | 05-09-2023 |
| | | DE | 102020214108 A1 | 12-05-2022 |
| | | EP | 4244974 A1 | 20-09-2023 |
| | | JP | 2023547691 A | 13-11-2023 |
| | | US | 2023412103 A1 | 21-12-2023 |
| | | WO | 2022101020 A1 | 19-05-2022 |
| US 2010226152 A1 | 09-09-2010 | AU | 2008310349 A1 | 16-04-2009 |
| | | CN | 101821933 A | 01-09-2010 |
| | | EP | 2200168 A1 | 23-06-2010 |
| | | JP | 2009095202 A | 30-04-2009 |
| | | KR | 20100044259 A | 29-04-2010 |
| | | US | 2010226152 A1 | 09-09-2010 |
| | | WO | 2009048037 A1 | 16-04-2009 |
| DE 102011078304 A1 | 03-01-2013 | KEINE | | |

EPO FORM P0461

Für nähere Einzelheiten zu diesem Anhang : siehe Amtsblatt des Europäischen Patentamts, Nr.12/82